# EUROPÄISCHE PATENTSCHRIFT

(11) **EP 2 731 992 B1**
(45) Veröffentlichungstag und Bekanntmachung des Hinweises auf die Patenterteilung: **12.04.2017**
(21) Anmeldenummer: 12733114.8
(22) Anmeldetag: 05.07.2012
(51) Int. Cl.: C08L 61/06, C08L 61/14, C08L 83/00, C08G 77/00

(54) **POLYSILOXAN-MODIFIZIERTES RESOLHARZ, DARAUS ERHÄLTLICHE FORMKÖRPER UND KOMPOSITE SOWIE VERFAHREN ZUM HERSTELLEN DES HARZES, DER FORMKÖPER UND DER KOMPOSITE**
POLYSILOXANE MODIFIED RESOL RESIN, MOULDED BODIES AND COMPOSITES OBTAINED THEREFROM AND METHODS FOR PRODUCING THE RESIN, THE MOULDED BODIES AND THE COMPOSITES
RÉSINE RÉSOL MODIFIÉE PAR DU POLYSILOXANE, CORPS MOULÉS ET COMPOSITES POUVANT ÊTRE OBTENUS À PARTIR DE CETTE RÉSINE, ET PROCÉDÉS DE FABRICATION DE CETTE RÉSINE, DE CES CORPS MOULÉS ET DE CES COMPOSITES

(30) Priorität: 12.07.2011 DE 102011051773
(43) Veröffentlichungstag der Anmeldung: 21.05.2014
(73) Patentinhaber: Fraunhofer Gesellschaft zur Förderung der angewandten Forschung E.V., 80686 München (DE)
(72) Erfinder: BAUER, Monika, 15712 Königs-Wusterhausen (DE); GLÄSEL, Hans-Jürgen, 04229 Leipzig (DE); DECKER, Daniel, 65835 Liederbach (DE)
(74) Vertreter: Strehl Schübel-Hopf & Partner
(86) Internationale Anmeldenummer: PCT/EP2012/063143
(87) Internationale Veröffentlichungsnummer: WO 2013/007600

(56) Entgegenhaltungen:
- WO-A1-01/62829
- WO-A1-96/33238
- US-A- 3 911 045
- US-A- 5 063 134

## Beschreibung

Die vorliegende Erfindung betrifft ein Phenolharz auf Resol-Basis ("Resolharz") sowie Formkörper und Komposite daraus, die organisch funktionalisierte Polysiloxane enthalten. Diese Polysiloxane beeinflussen relevante physikalische Kenngrößen solcher Formkörper- und Komposit-Materialien bzw. ihrer Vorprodukte (der Resole) signifikant.

Polysiloxan-modifizierte Phenolharze auf Resol-Basis sind bekannt. So beschreibt WO 01/062829 eine mehrstündige Umsetzung von epoxy-funktionalisierten Polysiloxanen mit einfach- oder mehrfach funktionellen Phenolen bei relativ hohen Temperaturen und das nachfolgende Vermischen des polysiloxan-modifizierten Polyphenols mit Resolharzen. Dabei werden die Polysiloxane über die Epoxygruppen kovalent in das Resolharz eingebunden. Durch eine anschließende Imprägnierung können Verbunde mit Glaspulver, Glasgewebe, Papier, Carbonfasern und Aramid erhalten werden. Die Resolharz-Kompositverbunde mit epoxy-funktionalisierten Polysiloxanen zeigen im Vergleich zu den komplementären methoxymodifizierten Systemen eine erhöhte verbleibende interlaminare Scherfestigkeit nach mehrmonatiger Lagerung in siedendem Wasser.

Die im Handel erhältlichen epoxymodifizierten Silicone enthalten relativ hohe organische Anteile, weshalb die Feuerbeständigkeit der damit hergestellten Harze, Formkörper oder Verbundwerkstoffe in der Regel nicht oder kaum verbessert wird. Außerdem erfordert die Herstellung epoxymodifizierter Silicone mehrere Schritte. Zwei weitere Schritte sind für die Herstellung der Resolharze nötig. Das Verfahren von WO 01/062829 ist daher aufwändig und teuer.

Des Weiteren sind Polysiloxan-Nanopartikel bekannt. Sie lassen sich beispielsweise über das Stöber-Verfahren herstellen. Sie sind begehrt, da sie relativ kleinteilig herstellbar sind (ein Beispiel ist das unter der Bezeichnung Aerosil® im Handel erhältliche Pulver) und damit große Oberflächen aufweisen. Deshalb lassen sie sich in vielerlei Anwendungen, insbesondere als Füllstoffe, vorteilhaft einsetzen.

Aus US 3,911,045 ist ein Verfahren zur Herstellung von temperaturbeständigen geformten Artikeln bekannt, bei dem ein Phenol-Formaldehyd- und/oder Kresol-Formaldehyd-Harz mit einem Polysiloxanharz umgesetzt wird. Die beiden Harz-Komponenten werden bei einer Temperatur miteinander gemischt, bei der sie alleine jeweils noch nicht aushärten.

WO 96/33238 A1 offenbart drei verschiedene Verfahrensvarianten, mit denen sich jeweils ein interpenetrierendes Polymer-Netzwerk (IPN) bilden lässt. Das IPN besteht aus chemisch auf unterschiedliche Weise vernetzten Polymerketten, nämlich Siloxan-Polymerketten und phenolischen Polymerketten, die im Wesentlichen untereinander chemisch nicht verknüpft sind, wobei das Phenol-Polymer Si-O-Gruppen in seiner Hauptkette aufweist.

Die Lehre der US 5,063,134 ist auf die Herstellung einer photoempfindlichen Zusammensetzung gerichtet, die entweder durch Umsetzung einer Silicium-Verbindung, die bereits phenolische Reste enthält, mit einem Aldehyd oder durch Umsetzung eines Aldehyds, der eine siliciumhaltige Komponente aufweist, mit einem Phenol gewonnen werden kann.

In WO 2010/142769 A1 sind Polysiloxan-Feinstpulver beschrieben, die durch Hydrolyse/Kondensations-Reaktionen von organofunktionellen Polysilazanen und/oder Alkoxysilanen unter stark alkalischen Bedingungen erhalten werden. Sie zeichnen sich u.a. durch eine sehr geringe primäre Teilchengröße, eine hohe spezifische Oberfläche und ein großes Porenvolumen aus. Ihre Eindispergierung in Cyanatharze und deren thermische Aushärtung ergibt polymere Nanokomposite mit signifikanter Erhöhung des Speichermoduls und der Glasübergangstemperatur, verbesserter Flammfestigkeit und verminderter Wasseraufnahme im Vergleich zum unmodifizierten Cyanatharz-Polymer.

Aufgabe der vorliegenden Erfindung ist es, ein makroskopisch homogenes siloxanmodifiziertes Resolharz bereitzustellen, aus dem sich Formkörper und Verbundwerkstoffe mit guter Flammfestigkeit und Biegefestigkeit sowie einer sehr geringen Wasseraufnahme herstellen lassen und das sich unter milden Bedingungen und ohne aufwändig herzustellende Ausgangsmaterialien erzeugen lässt.

Ein derartiges Resolharz lässt sich überraschenderweise dadurch bereitstellen, dass man in einem einstufigen Reaktionsansatz in situ sowohl eine Kondensationsreaktion von organisch modifizierten Silanen und/oder Silazanen unter Bildung von Si-O-Si- Brücken als auch eine Kondensation zwischen einem aromatischen Alkohol und einem Aldehyd unter Ausbildung des Resolharzes ablaufen lässt, und zwar vorzugsweise gleichzeitig oder annähernd gleichzeitig. Dabei bildet sich ein Produkt, in welchem Ketten, Ringe oder dreidimensionale Bereiche (Inseln) aus organisch modifiziertem Polysiloxan gleichmäßig in eine Resolharz-Matrix eingebettet sind, ohne dass diese über kovalente Bindungen in die Matrix eingebunden wären. Dieses Produkt ist auf molekularer Ebene als inhomogen anzusehen, wirkt wegen der geringen Abmessungen der eingebetteten Strukturen makroskopisch jedoch vollkommen homogen. Es kann in einem geeigneten Lösungsmittel als klare Lösung vorliegen.

Unter "aromatischen Alkoholen" sind erfindungsgemäß Alkohole mit mindestens einer an einem aromatischen Ring gebundenen ("phenolischen") Hydroxygruppe zu verstehen, beispielsweise ggf. substituierte Phenole, ggf. aber auch Verbindungen mit einer an ein kondensiertes Ringsystem gebundenen Hydroxygruppe. Weitere, ebenfalls an einem Aromaten gebundene oder nichtaromatische Hydroxygruppen können vorhanden sein.

Das genannte Resolharz kann wie jedes übliche Resolharz thermisch gehärtet werden. Auf diese Weise lassen sich z.B. duromere Formkörper erhalten. In Form einer Lösung kann es zur Imprägnierung beispielsweise von Glasfasern dienen. Durch die thermische Aushärtung lassen sich dabei Verbundwerkstoffe erhalten, deren thermische und mechanische Eigenschaften im Vergleich zum unmodifizierten Phenolharz/Faser-Verbund deutlich verbessert sind.

Ein wichtiger Aspekt der Erfindung ist die Reaktionsführung. Denn die Erfinder mussten feststellen, dass die Einarbeitung von bereits fertig hergestellten Polysiloxan-Nanopartikeln, beispielsweise von solchen gemäß WO 2010/142769 A1, in Phenolharze auf Resol-Basis ungeeignet zur Herstellung wünschenswerter Harze und Komposite ist, weil sie zu einer sehr ungleichmäßigen Verteilung der Teilchen in der polymeren Matrix und damit schon zu rein optisch unansehnlichen Kompositen führt.

Dementsprechend stellt die Erfindung Resolharze bereit, die mit organisch modifizierten Polysiloxanen intrinsisch modifiziert sind, wie in Anspruch 1 definiert. Die Polysiloxane enthalten an Siliciumatome gebundene, unsubstituierte oder, in spezifischen Ausführungsformen, substituierte Kohlenwasserstoffreste und dabei insbesondere fluorierte Alkyl-, Alkenyl-, Aryl-, Arylalkyl- oder Alkylarylgruppen. Die Substituenten, sofern vorhanden, werden so gewählt, dass sie mit OH-Gruppen aromatischer Alkohole, mit Aldehyden und mit Hydroxy- oder Ethergruppen von Resolen nicht reagieren. Sie umfassen daher vorzugsweise keine sauerstoff-, schwefel-, stickstoff- oder phosphorhaltigen Reste, und die Polysiloxane sind nicht kovalent in die Resolmatrix eingebunden.

Die Polysiloxane werden in einer spezifischen Ausführungsform so gewählt, dass dann, wenn sie aus denselben Ausgangsmaterialien, aber in Abwesenheit von aromatischem Alkohol und Aldehyd hergestellt werden würden, in Form von Partikeln mit einem Kontaktwinkel gegenüber Wasser von mindestens ca. 100°, stärker bevorzugt von mindestens 110°, noch stärker bevorzugt von mindestens 120° und in spezifischen Fällen von mindestens 135° oder sogar noch darüber anfallen würden. Letztere nennt man superhydrophob. Man erhält sie insbesondere dann, wenn das Polysiloxan fluorierte Kohlenwasserstoffreste aufweist. Diesbezüglich kann wiederum auf WO 2010/142769 A1 verwiesen werden. Die Verwendung besonders hydrophober Polysiloxane hat eine Minimierung der Wasseraufnahme bei Wasserkontakt bzw. Lagerung zur Folge.

An mindestens 40, vorzugsweise an mehr als 60 und ganz besonders bevorzugt an mehr als 80 Prozent der Siliciumatome ist mehr als ein kohlenwasserstoffhaltiger Rest angebunden. Dies führt zu einem wesentlichen Anteil an kettenförmigem Polysiloxan. In einer bevorzugten Ausführungsform enthalten die Polysiloxane durchschnittlich maximal 3, stärker bevorzugt maximal 2 und besonders bevorzugt maximal 1,6 Kohlenstoffatome pro Siliciumatom. Diese Ausführungsform zeichnet sich durch besonders günstige Flammfestigkeiten der ausgehärteten Produkte aus. Die beiden letztgenannten Ausführungsformen lassen sich gegebenenfalls kombinieren.

Hinsichtlich der Ausgangsmaterialien für die Siloxankomponente des Produkts eignen sich prinzipiell alle Silazane mit der Einheit -Si(R)(R¹)-NR²- bzw. alle Silane mit der Formel R'ₐSiX₄₋ₐ, worin R und R¹ im Falle von gemischt aufgebauten Silazanen mit mehreren unterschiedlichen Einheiten -Si(R)(R¹)-NR²- jeweils in den unterschiedlichen Einheiten gleich oder verschieden sowie in ein und derselben Einheit jeweils gleich oder verschieden sein können und ein unsubstituiertes oder wie oben definiert substituiertes Alkyl, Alkenyl, Aryl, Arylalkyl, Alkylaryl oder Wasserstoff bedeuten, R² bevorzugt Wasserstoff ist, aber auch Alkyl sein kann, R' gleich oder verschieden ist und ein unsubstituiertes oder wie oben definiert substituiertes Alkyl, Alkenyl, Aryl, Arylalkyl oder Alkylaryl ist, X eine unter Hydrolysebedingungen vom Silicium unter Ausbilden einer Si-O-Si-Gruppe hydrolytisch kondensierbare Gruppe, z.B. Acyloxy, Alkylcarbonyl, Alkoxycarbonyl oder NR³ mit R³ gleich Wasserstoff, Alkyl (vorzugsweise mit 1 bis 4 Kohlenstoffatomen) oder Aryl, insbesondere aber eine Alkoxygruppe mit vorzugsweise 1 bis 6, besonders bevorzugt 1 oder 2 Kohlenstoffatomen oder OH ist und a 1 oder 2 ist. Gegebenenfalls können zusätzlich Silane der obigen Formel mit a gleich 0 und/oder mit a gleich 3 eingesetzt werden. Insbesondere kommen die Ausgangsmaterialien in Betracht, die in WO 2010/142769 A1 zur Herstellung der Polysiloxan-Partikel genannt sind. Zu erwähnen ist, dass selbstverständlich auch Mischung aus Silazanen und Silanen zum Einsatz kommen können.

An Silazanen seien beispielhaft genannt: Polysilazane oder Gemische aus Polysilazanen, die 40 bis 100% Einheiten -Si(R)(R¹)-NH, in denen R und R¹ ein Alkylrest oder Alkenylrest mit 1 bis zu 7 Kohlenstoffatomen bedeutet, und 0 bis 40% Einheiten -Si(R)(R¹)-NH- tragen, in denen R und Alkylrest oder Alkenylrest mit 1 bis 4 Kohlenstoffatomen und R¹ Wasserstoff bedeuten. Besonders bevorzugt sind Silazane mit 40%, noch weiter bevorzugt mit 60% und darüber und ganz besonders bevorzugt ab 80% Einheiten -Si(R)(R¹)-NR²-, in denen beide Reste R und R¹ Methylgruppen darstellen oder ein Rest eine Methylgruppe und der andere Rest eine C₁-C₃-Alkyl- oder Alkenylgruppe, insbesondere entweder eine Vinylgruppe oder ebenfalls eine Methylgruppe ist, in Kombination mit höchstens 60%, vorzugsweise höchstens 40% und ganz besonders bevorzugt höchstens 20% Einheiten, in denen einer der beiden genannten Reste Wasserstoff ist und der andere so gewählt wird, dass die obigen Atomverhältnisse eingehalten werden.

Spezifische Beispiele sind Vinylmethylpolysilazan oder ein Polysilazan aus einer Mischung aus Dimethylsilazan- und Methylsilazan-Einheiten, z. B. im Molverhältnis von 85 zu 15.

An Silanen seien beispielhaft genannt: Silane der Formel R'ₐSiX₄₋ₐ, worin R' ein Alkyl oder Alkenyl mit 1 bis 12 und a 1 ist, wobei X in allen Fällen wie voranstehend für die Silane definiert und vorzugsweise Alkoxy mit 1 bis 4 Kohlenstoffatomen, insbesondere Methoxy oder Ethoxy ist. Besonders bevorzugt werden Silane der Formel R'ₐSiX₄₋ₐ mit a gleich 2 eingesetzt, worin ein Rest R' gleich Alkyl (z.B. Methyl) oder Alkenyl (z.B. Vinyl) und der zweite Rest R' Alkyl (z.B. Methyl oder Ethyl) ist (alle genannten Reste R' mit vorzugsweise 1-12, stärker bevorzugt 1-6 Kohlenstoffatomen). Die Reste R' können dabei gleich oder verschieden sein.

Spezifische Beispiele sind Vinylmethyldimethoxysilan oder eine Mischung aus Dimethyldimethoxysilan und Methyltrimethoxysilan, beispielsweise im Molverhältnis von 85 zu 15.

Die erfindungsgemäßen polysiloxan-modifizierten Resolharz-Systeme lassen sich dadurch herstellen, dass entsprechend substituierte Silazane, cyclische oder offenkettige Polysilazane, Silane, oligomere Siloxane, Mischungen solcher (Poly-) Silazane, bzw. Silane/oligomere Siloxane oder Mischungen von (Poly)-Silazanen mit Silanen/oligomeren Siloxanen in einem Lösungsmittel gelöst und zusammen mit Phenolen und Aldehyden im alkalischen Milieu simultan umgesetzt werden.

Die Wahl der als Ausgangsmaterial einsetzbaren aromatischen Alkohole und Aldehyde ist nicht kritisch. Prinzipiell kann jedes mono- oder mehrfachfunktionelle Phenol (C₆R¹-R⁵)OH mit den Substituenten R¹, R², R³, R⁴ und R⁵ eingesetzt werden, worin R¹ bis R⁵ unabhängig voneinander Wasserstoff, Hydroxy, C₁-C₁₀-Alkyl, C₁-C₁₀-Alkylen, C₃-C₈-Cycloalkyl, C₃-C₈-Cycloalkoxy, C₁-C₁₀-Alkoxy, Halogen (F, Cl, Br oder I), Phenyl, Phenoxy oder Phenoxyphenyl ist und/oder zwei der Reste R¹ bis R⁵ zusammen mit zwei oder mehr Kohlenstoffatomen des Phenolrings eine kondensierte Brücke bilden können und wobei die Alkyl-, Alkenyl und/oder Arylgruppen vorzugsweise unsubstituiert sind, statt dessen aber auch fluoriert oder teilfluoriert sein können. Beispiele sind Phenol, 3-Methylphenol, Resorcinol, 2.2-(Bis-4-hydroxyphenyl)-propan, Tris-(4-hydroxyphenyl)-methan und 1.2-Bis-(2.4.6-trihydroxyphenyl)-ethan. Es kann ein Phenol oder eine Mischung aus mehreren Phenolen verwendet werden. Vergleichbare kondensierte Verbindungen können ebenfalls als Ausgangsmaterial verwendet werden.

Ebenso kann jeder mono- und mehrfachfunktionelle Aldehyd R-CHO eingesetzt werden, worin R Wasserstoff, Formyl, C₁-C₁₀-Alkyl, C₁-C₁₀-Formylalkyl, C₃-C₈-Cycloalkyl, C₃-C₈-Formylcycloalkyl, C₁-C₁₀-Halogenalkyl (F, Cl, Br oder I), Phenyl oder Formylphenyl ist und wobei die Alkyl- oder Arylgruppen vorzugsweise unsubstituiert sind, gegebenenfalls aber auch fluoriert oder teilfluoriert sein können. Beispiele sind Formaldehyd, Acetaldehyd, Succinaldehyd, 4.4'-(Bis-Formyl)-diphenylether und Tris-(4-Formylphenyl)-methan. Wiederum kann ein oder können mehrere Aldehyde verwendet werden.

Das Ausgangsmaterial für den Polysiloxan-Anteil des Harzes (ein Polysilazan oder Polysilazan-Gemisch und/oder ein Silan oder ein Silangemisch) sowie der aromatische Alkohol, oder ein Gemisch solcher Alkohole werden gemäß der Erfindung in einem geeigneten, vorzugsweise nichtwässrigen Lösungsmittel vorgelegt (zum Beispiel in einem Alkohol wie Isopropanol) und ggf. unter Rühren zum Rückfluss erhitzt. Kurz nach oder gleichzeitig mit der Dosierung einer katalytisch wirksamen Menge eines basischen Zusatzes, z. B. einer geringen Menge starker wässriger Base wie Natrium- oder Kaliumhydroxid, gegebenenfalls stattdessen einer wasserfreien Base, erfolgt die Zugabe des Aldehyds, wobei zumindest dann, wenn der Aldehyd Formaldehyd ist, unter den üblichen Bedingungen auch Wasser ins System eingetragen wird. Der Aldehyd wird dabei in der Regel im molaren Überschuss (Molverhältnis Alkohol /Aldehyd üblicherweise zwischen 1:1.05 und 1:3.5) eingesetzt. Der Polysiloxan/Silazan-Anteil im Resolharzverbund beträgt in günstiger Weise 5 bis 50 Ma.-%; je nach gewünschten Eigenschaften des Endprodukts. Nach einer weiteren Reaktionszeit von typisch einigen Stunden wird die erhaltene klare Polysiloxan/Resolharz-Lösung bzw. -Emulsion gegebenenfalls bis zu einer für die nachfolgende Imprägnierung optimalen Viskosität eingeengt.

Als aromatischer Alkohol wird vorzugsweise ein Phenol eingesetzt.

Sofern das so erhaltene, mit Polysiloxan modifizierte Resolharz zu einem Formkörper ausgehärtet werden soll, wird das Lösungsmittel aus dem Gemisch entfernt, worauf die Masse gegebenenfalls bei erhöhter Temperatur in die geeignete Form gebracht und ausgehärtet wird. Bevorzugt werden die Polysiloxan/Resolharz-Systeme allerdings als Imprägnierungsmittel, Beschichtungsmittel oder Tränkharz eingesetzt. Hierfür wird die Viskosität der Lösung durch Verdünnen oder Aufkonzentrieren derart eingestellt, dass damit Substrate (z.B. aus oder mit Glas-, Carbon- und/oder Naturstoff-Fasern) problemlos imprägniert werden können. Dabei liegt der Gesamtharz-Anteil typischerweise im Bereich von 10 bis 60 Ma.-%, vorzugsweise im Bereich von 20 bis 40 Ma.-% und beispielhaft bei etwa 30 Ma.-%. Durch nachfolgendes Verpressen und gleichzeitiges Tempern (typisch 5 bar; 30 Min. 160°C) werden Polysiloxan/Resolharz- (und insbesondere Polysiloxan/Phenolharz-) Verbundwerkstoffe mit homogener Verteilung der Polysiloxan-Komponente erhalten. Ebenso ist eine Fertigung von Polysiloxan/Resolharz-Formkörpern möglich, die keine Faser-Füllstoffe enthalten.

Das ausgehärtete Harz in Form eines Formkörpers sowie mit dem Harz imprägnierte Substrate zeigen eine signifikante Verbesserung der Flammfestigkeit und Biegefestigkeit sowie eine verminderte Wasseraufnahme im Vergleich zum Polysiloxan-freien Referenzsystem.

Gegebenenfalls können der Harzlösung oder dem vom Lösungsmittel befreiten Harz ein oder mehrere weitere Additive zugesetzt werden wie Farbstoffe, Pigmente oder dergleichen. Eine weitere Verbesserung relevanter Kenngrößen erreicht man überraschenderweise durch zusätzliche Dosierung von Wachsen, insbesondere auf Polysiloxan-Basis, zu den präparativ anfallenden Lösungen der polysiloxan-modifizierten Resolharze. Bezogen auf das Gesamtsystem können hier vorteilhaft 1 bis 25 Ma.-% verwendet werden. Als Beispiel hierfür kann das kommerziell erhältliche Wax OH 350-D der Wacker Chemie AG genannt werden, bei dem es sich um ein Polydimethylsiloxan ABA Blockcopolymer mit Polycaprolacton handelt.

Eine alleinige Zugabe solcher Wachse ohne die erfindungsgemäßen, organisch modifizierten Polysiloxane ist dagegen nicht ausreichend, um das angestrebte hohe Niveau der mechanischen Eigenschaften zu erreichen: Zumindest bei erhöhten Füllgraden tritt eine Verminderung des Speichermoduls durch Weichmacher-Wirkung ein.

Nachstehend soll die Erfindung anhand von Beispielen näher erläutert werden.

### Beispiel 1:

In einem 2l-Vierhalskolben mit KPG-Rührer, Rückflusskühler, 5 ml und 500 ml Tropftrichtern und Heizbad werden 56.2 g eines Polysilazans mit etwa 85 Mol-% Einheiten der Zusammensetzung -[Si(CH₃)₂NH]- und etwa 15 Mol-% Einheiten der Zusammensetzung - [Si(H)(CH₃)-NH]- (ML-85 der Clariant Produkte Deutschland GmbH) und 183.4 g Phenol in 500 ml Isopropanol vorgelegt und unter Rühren zum Rückfluss erwärmt. Sodann gibt man auf einmal 3.46 g 50 Ma.-%-ige Natronlauge und danach 237.3 g einer 37 Ma.%-igen wässrigen Formaldehydlösung innerhalb von ca. 10 Minuten zu. Es kommt zur Bildung von Ammoniak und Wasserstoff. Man rührt noch 3 Stunden unter Rückfluss weiter, kühlt dann das Reaktionsgemisch auf RT ab und neutralisiert mit Eisessig gegen Phenolphthalein. Zuletzt wird das Lösemittelgemisch am Rotationsverdampfer bei T = 60°C und p = 100 mPa bis zu einer für die nachfolgende Imprägnierung optimalen Viskosität abdestilliert. Der Gehalt an Polysiloxan im Resolharz beträgt ca. 21 Ma.-%.
Ansatzbezeichnung: **ML-85**

### Beispiel 2:

Beispiel 1 wird mit der Änderung wiederholt, dass nach dem Reaktionsende 14.2 g (5 Ma.-%) Polysiloxan-Wachs OH 350-D (Wacker Chemie AG) zur isopropanolischen Lösung des polysiloxan-modifizierten Resolharzes gegeben werden. Der Polysiloxan-Anteil im Harz beträgt somit insgesamt 25 Ma.-%.
Ansatzbezeichnung: **ML-85/Wachs**

### Beispiel 3:

Beispiel 1 wird mit der Änderung wiederholt, dass 87.2 g Vinylmethyldimethoxysilan (ABCR GmbH) anstatt von Polysilazan ML-85 eingesetzt werden.
Ansatzbezeichnung: **VL-100/MOS**

### Beispiel 4:

Beispiel 1 wird mit der Änderung wiederholt, dass 52.2 g (59 mol-%) Dimethyldimethoxysilan und 41.1 g (41 mol-%) Methyltrimethoxysilan (beide ABCR GmbH) anstatt von Polysilazan ML-85 eingesetzt werden.
Ansatzbezeichnung: **ML-59/MOS**

### Beispiel 5:

Beispiel 1 wird mit der Änderung wiederholt, dass 86.2 g (85 mol-%) Dimethyldimethoxysilan und 17.2 g (15 mol-%) Methyltrimethoxysilan (beide ABCR GmbH) anstatt von Polysilazan ML-85 eingesetzt werden.
Ansatzbezeichnung: **ML-85/MOS**

### Beispiel 6:

Beispiel 5 wird mit der Änderung wiederholt, dass nach dem Reaktionsende 14.2 g (5 Ma.-%) Polysiloxan-Wachs OH 350-D (Wacker Chemie AG) zur isopropanolischen Lösung des polysiloxan-modifizierten Resolharzes gegeben werden. Der Polysiloxan-Anteil im Harz beträgt somit insgesamt 25 Ma.-%.
Ansatzbezeichnung: **ML-85/MOS/Wachs**

### Beispiel 7 (Vergleichsbeispiel):

Beispiel 1 wird mit der Änderung wiederholt, dass keine Polysilazane und Silane eingesetzt werden und nach dem Reaktionsende 11.9 g (5 Ma.-%) Polysiloxan-Wachs OH 350-D (Wacker Chemie AG) zur isopropanolischen Lösung des unmodifizierten Resolharzes gegeben werden.
Ansatzbezeichnung: **Wachs**

### Beispiel 8 (Vergleichsbeispiel):

Beispiel 1 wird mit der Änderung wiederholt, dass keine Polysilazane, Silane und Polysiloxan-Wachs OH 350-D eingesetzt werden.
Ansatzbezeichnung: **Referenz**

Mit den vorgenannten Resolharz-Lösungen lassen sich beliebige Substrate wie voranstehend beschrieben imprägnieren, beschichten oder tränken. Beispielhaft werden nachstehend Untersuchungen an Glasfaser-Komposit-Verbunden vorgestellt.

Zur Herstellung der Komposit-Verbunde wurden zunächst 4 Lagen Glasfasern vom Typ Atlas (P-D Interglas Technologies AG) mit einem Flächengewicht von 296 g/m² mit den gemäß den Beispielen 1-8 anfallenden Resolharz-Lösungen imprägniert. Durch eine nachfolgende 7.5 minütige Temperung bei 120°C erfolgte die Entfernung des restlichen Lösemittelgemisches und eine Vorvernetzung der Harze. Das entstandene Prepeg wurde in einer Laborpresse VKE (Lauffer GmbH & Co. KG) 30 Minuten bei 160°C unter einem Druck von 5 bar ausgehärtet. Man erhält Polysiloxan/Phenolharz-Glasfaserverbunde bzw. den unmodifizierten Referenz-Verbund mit einer Dicke von typisch 0.85 mm und einem Gesamtharz-Anteil um 30 Ma.-%.

Zur Bestimmung der Flammfestigkeit der Komposit-Verbunde wurde ein Cone-Kalorimeter (Fire Testing Technology Ltd.; UK) bei einem Wärmefluss von 50 kW/m² eingesetzt. Die Prüfkörper hatten jeweils die Abmessungen L * B * H von typisch 100 * 100 * 0.85 mm³ mit einer Masse von ca. 16 g.

Zur Ermittlung der maximalen Biegespannung der Komposit-Verbunde beim Bruch der Probe und damit der Bruchfestigkeit sowie des Biegemoduls (3-Punkt - Biegetest) wurde das Prüfgerät Instron 3369 (Instron Deutschland GmbH) bei einer maximalen Biegekraft von 13-15 kN mit der Prüfgeschwindigkeit 10 mm/min verwendet. Die Messungen erfolgten an jeweils 5 Vergleichsproben mit den typischen Abmessungen L * B * H = 80 * 10 * 0.85 mm³ und einer Masse von ca. 1.2 g.

Zur Bestimmung der Wasseraufnahme der Komposit-Verbunde bei RT wurden die Prüfkörper (L * B * H = 80 * 10 * 0.85 mm³; jeweils 2 Vergleichsproben) in ein mit destilliertem Wasser gefülltes Becherglas überführt und die Gewichtszunahme nach definierten Lagerzeiten unter der Verwendung einer Analysenwaage ermittelt.

Die Untersuchungen zum Brandverhalten der Polysiloxan-modifizierten Phenolharz-Glasfaserverbunde (Wärmefluss 50 kW/m²) ergaben, dass die maximale Wärmefreisetzungsrate (HRR) insbesondere bei den Proben ML-85, ML-5/MOS/Wachs sowie ML-85/Wachs mit 43, 71 bzw. 83 kW/m² gegenüber dem unmodifizierten Phenolharz (153 kW/m²) deutlich vermindert ist. Auch die modifizierten Verbunde VL-100/MOS und ML-59/MOS (HRR 117 bzw. 112 kW/m²) zeigen einen - wenn auch nur mäßig ausgeprägten - positiven Effekt. Die Gesamtwärmefreisetzung beim Verlöschen (THR) liegt für alle Komposit-Verbunde mit 1.8 MJ/m² (ML-85/Wachs) bis 3.3 MJ/m² (Referenz/Wachs) weit unterhalb des Wertes für das unmodifizierte Harz (5.2 MJ/m²). Dementsprechend liegen die Maxima der mittleren Wärmesetzungsrate MARHE bei 21 kW/m² (ML-85) bis 38 kW/m² (VL-100/MOS) vs. 53 kW/m² (Referenz).

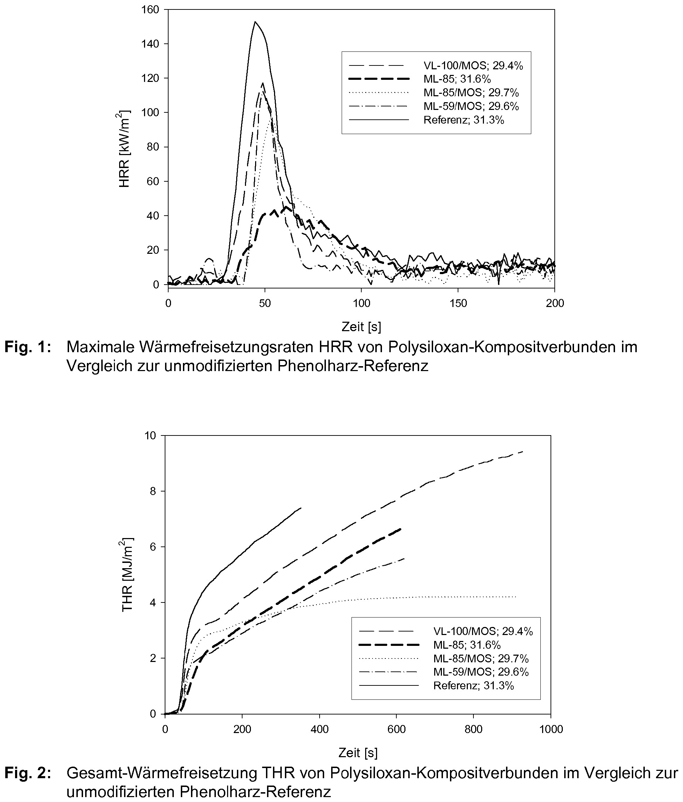

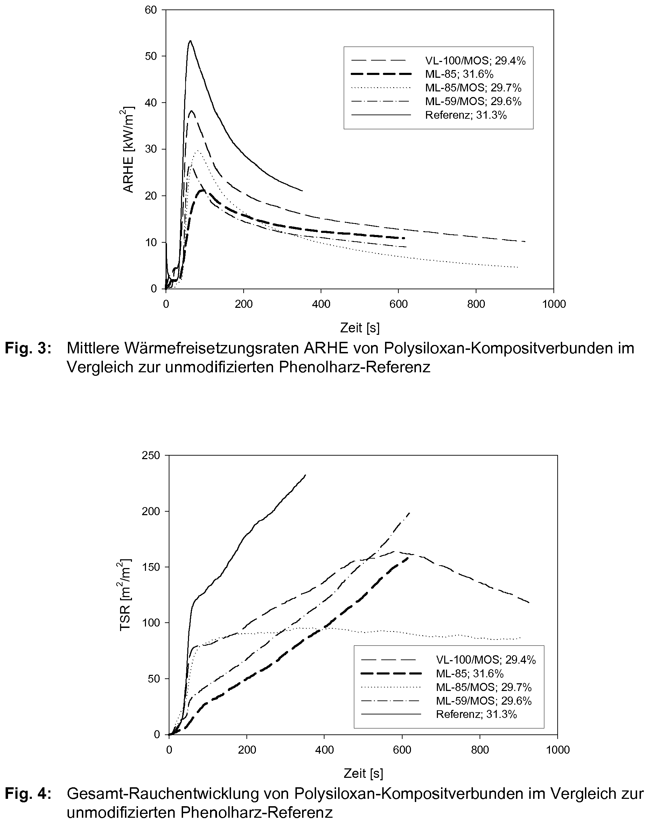

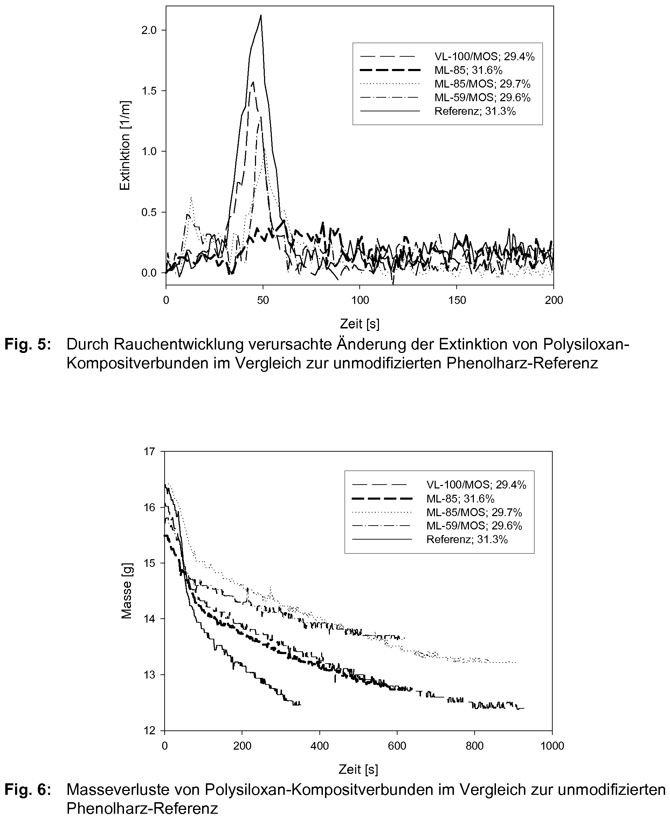

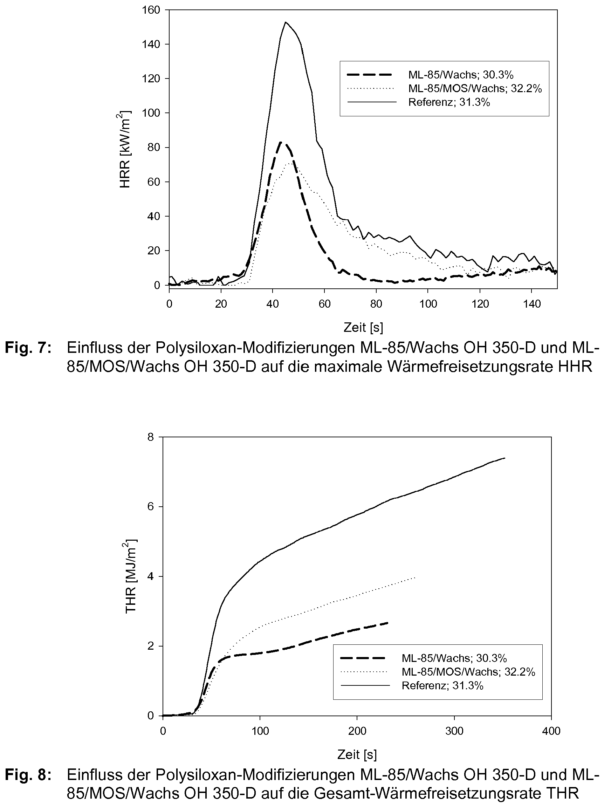

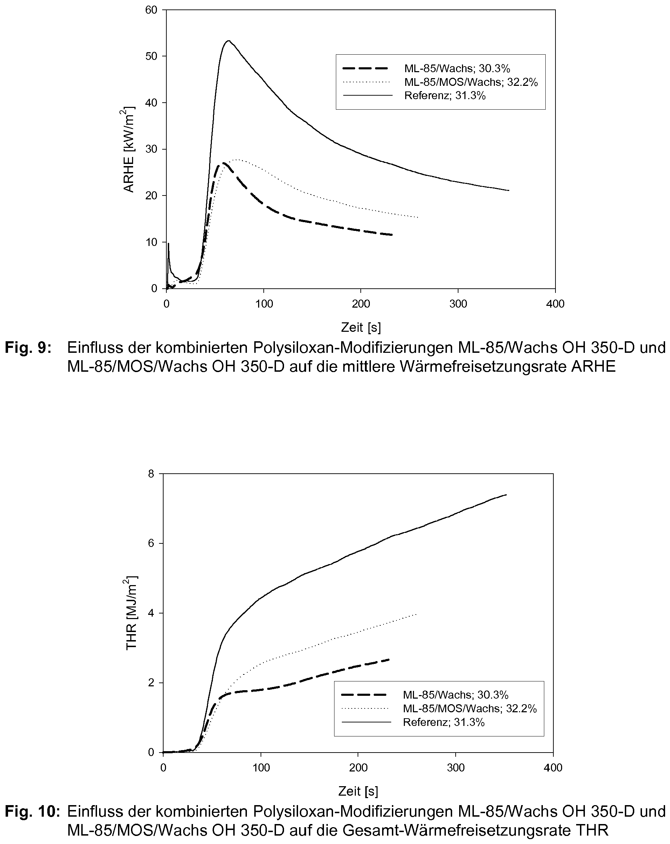

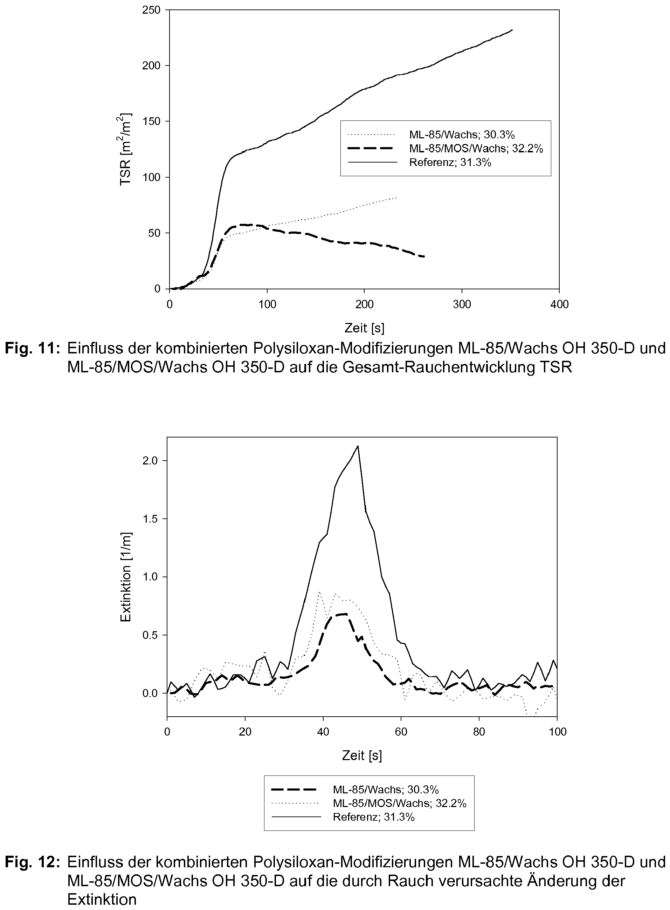

Zusammenfassend ist zu sagen, dass die Polysiloxan-Glasfaserverbunde mit ML-85/Wachs und ML-85/MOS/Wachs die beste Flammfestigkeit zeigen, da die zusätzliche Füllung mit 5 Ma.-% Polysiloxan-Wachs OH 350-D zu einer sehr starken Reduzierung der Rauchentwicklung TSR führt (Beispiel: 2.7 m²/m²; ML-85/Wachs gegenüber 6.7 m²/m²; ML-85). Die Figuren 1-13 zeigen die einzelnen Befunde an den relevanten Kenngrößen. Dabei geben im Weiteren die Zahlenwerte hinter den Probebezeichnungen den Gesamtharz-Anteil (Harz plus Polysiloxan) im Verbund in Ma.-% an. Tabelle 1 fasst die Ergebnisse zusammen.

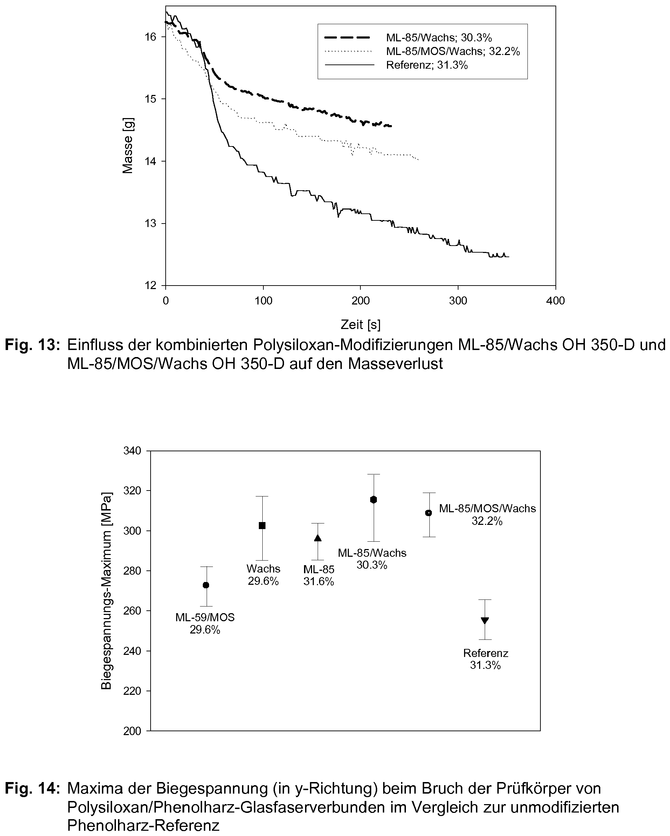

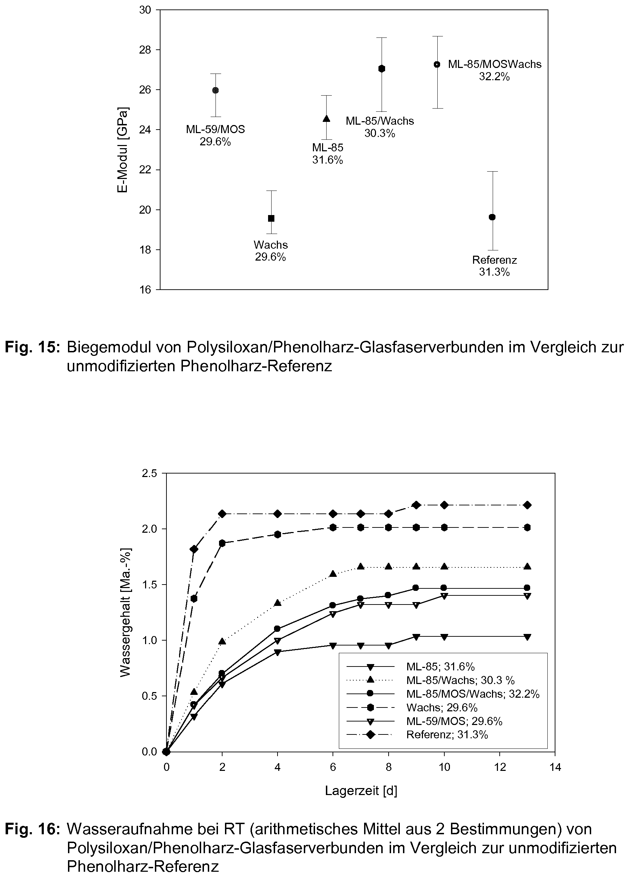

Die Untersuchungen mittels 3-Punkt - Biegetest zeigten im Vergleich zur unmodifizierten Referenz bei fast allen Modifizierungen (Ausnahme Polysiloxan-Modifizierung aus ML-59/MOS) eine sehr deutlich ausgeprägte Erhöhung des Biegespannungs-Maximums und damit der Biege-Bruchfestigkeit auf. Dabei ergaben die Systeme mit jeweils 20/5 Ma.-% ML-85/Wachs und ML-85/MOS/Wachs die besten Resultate (vgl. Fig. 14). Dieser Befund überträgt sich auch auf die Verbesserung der Werte des E (Biege)-Moduls in Fig. 15.

Obwohl alle Resolharz-Glasfaserverbunde nach 13-tägiger Wasser-Lagerzeit bei RT mit H₂O-Anteilen von deutlich unter 4 Ma.-% eine sehr geringe Wasseraufnahme zeigen, ist festzustellen, dass die Modifizierung mit Polysiloxanen präpariert sowohl aus Polysilazanen als auch Silanen zu einer weiteren Verminderung des Wassergehaltes gegenüber dem unmodifizierten Phenolharz-System führt. Die alleinige Modifizierung mit polysiloxan-haltigem Wachs OH 350-D bewirkt dagegen keinen signifikanten Effekt (vgl. Fig. 16).

Insgesamt gesehen zeigen die Resolharz-Glasfaserverbunde mit jeweils 20/5 Ma.-% kombinierter Polysiloxan-Modifizierung ML-85/Wachs OH 350-D und ML-85/MOS/Wachs OH 350-D die besten Ergebnisse.

**Tabelle 1: Zusammenfassung relevanter Kenngrößen zum Brandverhalten von Polysiloxan/Phenolharz - Glasfaserverbunden**

| **Probe; Gesamt-Harzgehalt** | **HRR-Peak [kW/m²]** | **MARHE [kW/m²]** | **THR [MJ/m²]** | **THR (Ende) [MJ/m²]** | **TSR [m²/m²]** | **CR [%]** | **CR (Ende) [%]** |
|---|---|---|---|---|---|---|---|
| VL-100/MOS; 29.4% | 117 | 38 | 3.1 | 9.4 | 164 | 89 | 77 |
| ML-85; 31.6% | 43 | 21 | 2.1 | 6.7 | 158 | 92 | 82 |
| ML-85/MOS; 29.7% | 97 | 30 | 2.9 | 4.2 | 96 | 91 | 84 |
| ML-59/MOS; 29.6% | 112 | 27 | 2.1 | 5.6 | 198 | 92 | 88 |
| ML-85/Wachs; 30.3% | 83 | 28 | 1.8 | 2.7 | 90 | 92 | 89 |
| ML-85/MOS/Wachs; 32.2% | 71 | 28 | 2.6 | 4.0 | 53 | 90 | 86 |
| Referenz/Wachs; 29.6% | 97 | 32 | 3.3 | 5.4 | 73 | 85 | 79 |
| Referenz; 31.3% | 153 | 53 | 5.2 | 7.3 | 232 | 86 | 77 |

## Patentansprüche

1. Resolharz aus mindestens einer aromatischen Komponente mit mindestens einer phenolischen Hydroxygruppe und mindestens einer Aldehyd-Komponente, **gekennzeichnet durch** in die Resolharz-Matrix eingebettete Bereiche aus organisch modifiziertem Polysiloxan, wobei das Polysiloxan kohlenstoffhaltige Gruppen aufweist, die zumindest teilweise in Form von unsubstituierten oder substituierten Alkyl-, Alkenyl-, Aryl-, Arylalkyl- oder Alkylarylgruppen an Siliciumatome gebunden sind und nicht über kovalente Bindungen an reaktive Gruppen des Resolharzes gebunden sind, wobei an mindestens 40 Prozent der Siliciumatome des Polysiloxans mehr als ein kohlenstoffhaltiger Rest angebunden ist.

2. Resolharz nach Anspruch 1, **dadurch gekennzeichnet, dass** die Polysiloxane einen Anteil von durchschnittlich maximal 3, stärker bevorzugt maximal 2 und besonders bevorzugt maximal 1,6 Kohlenstoffatome pro Siliciumatom aufweisen.

3. Resolharz nach einem der voranstehenden Ansprüche, worin die Alkyl-, Alkenyl-, Aryl, Arylalkyl- und/oder Alkylarylgruppen des Polysiloxans unsubstituiert oder teilweise oder vollständig fluoriert sind.

4. Resolharz nach einem der voranstehenden Ansprüche, weiterhin umfassend ein Wachs, vorzugsweise ein Wachs aus einem Polysiloxan-Copolymer.

5. Formkörper aus oder mit einem Phenoplast-Material, entstanden durch Aushärten des Resolharzes nach einem der voranstehenden Ansprüche.

6. Formkörper nach Anspruch 5, umfassend ein Trägermaterial sowie ein auf Oberflächen desselben befindliches, ausgehärtetes Resolharz.

7. Verfahren zum Herstellen eines Resolharzes aus mindestens einer aromatischen Komponente mit mindestens einer phenolischen Hydroxygruppe und mindestens einer Aldehyd-Komponente, welches in die Resolharz-Matrix eingebettete Bereiche aus organisch modifiziertem Polysiloxan besitzt, wobei das Polysiloxan kohlenstoffhaltige Gruppen aufweist, die zumindest teilweise in Form von unsubstituierten oder substituierten Alkyl-, Alkenyl-, Aryl-, Arylalkyl- oder Alkylarylgruppen an Siliciumatome gebunden sind und nicht über kovalente Bindungen an reaktive Gruppen des Resolharzes gebunden sind, **dadurch gekennzeichnet, dass**
(1)
(a) ein Silazan oder eine Mischung unterschiedlicher Silazane mit einer oder mehreren Einheiten -[Si(R)(R¹)-NR²]-, worin R und R¹ in jeder einzelnen Einheit und, bei Vorliegen unterschiedlicher Einheiten, in unterschiedlichen Einheiten jeweils gleich oder verschieden sind und ein unsubstituiertes oder substituiertes Alkyl, Alkenyl, Aryl, Arylalkyl, Alkylaryl oder Wasserstoff bedeuten und R² Wasserstoff oder Alkyl ist und/oder
(b) ein Silan oder eine Mischung unterschiedlicher Silane mit der Formel R'ₐSiX₄₋ₐ, worin R' gleich oder verschieden ist und ein unsubstituiertes oder substituiertes Alkyl, Alkenyl, Aryl, Arylalkyl oder Alkylaryl ist, X eine unter Hydrolysebedingungen vom Silicium unter Ausbilden eine Si-O-Si-Gruppe hydrolytisch kondensierbare Gruppe oder OH ist und a 1 oder 2 bedeutet, oder ein durch hydrolytische Kondensation dieses Silans/dieser Silane erhältliches Oligosiloxan oder eine Mischung solcher Oligosiloxane und
(2) eine aromatischeKomponente mit mindestens einer phenolischen Hydroxygruppe in einem Lösungsmittel vorgelegt und in diesem Lösungsmittel
(3) mit einem wässrigen alkalischen Medium oder einer nichtwässrigen Base sowie Wasser als Katalysator und
(4) mit einer Aldehyd-Komponente
umgesetzt werden.

8. Verfahren nach Anspruch 7, **dadurch gekennzeichnet, dass** das Lösungsmittel ein nichtwässriges Lösungsmittel und vorzugsweise ein Alkohol ist, und/oder worin das wässrige alkalische Medium ausgewählt ist unter wässrigem Natrium- und Kaliumhydroxid mit einem pH-Wert von mindestens 13.

9. Verfahren nach einem der Ansprüche 7 und 8, **dadurch gekennzeichnet, dass** die Zugabe des wässrigen alkalischen Mediums oder der nichtwässrigen Base und Wasser unmittelbar vor oder gleichzeitig mit der Zugabe der Aldehyd-Komponente erfolgt.

10. Verfahren nach einem der Ansprüche 7 bis 9, **dadurch gekennzeichnet, dass** nach Abschluss der Umsetzung dem polysiloxan-modifizierten Resolharz ein Wachs zugesetzt wird, und zwar vorzugsweise in einer Menge von 1 bis 25 Ma.-%, bezogen auf die Masse des Gesamtsystems.

11. Verfahren zum Herstellen eines phenoplastischen Formkörpers, entstanden durch Aushärten eines Resolharzes aus mindestens einer aromatischen Komponente mit mindestens einer phenolischen Hydroxygruppe und mindestens einer Aldehyd-Komponente, welches in die Resolharz-Matrix eingebettete Bereiche aus organisch modifiziertem Polysiloxan besitzt, wobei das Polysiloxan kohlenstoffhaltige Gruppen aufweist, die zumindest teilweise in Form von unsubstituierten oder substituierten Alkyl-, Alkenyl-, Aryl-, Arylalkyl- oder Alkylarylgruppen an Siliciumatome gebunden sind und nicht über kovalente Bindungen an reaktive Gruppen des Resolharzes gebunden sind, **dadurch gekennzeichnet, dass**
(1)
(a) ein Silazan oder eine Mischung unterschiedlicher Silazane mit einer oder mehreren Einheiten -[Si(R)(R¹)-NR²]-, worin R und R¹ in jeder einzelnen Einheit und, bei Vorliegen unterschiedlicher Einheiten, in unterschiedlichen Einheiten jeweils gleich oder verschieden sind und ein unsubstituiertes oder substituiertes Alkyl, Alkenyl, Aryl, Arylalkyl, Alkylaryl oder Wasserstoff bedeuten und R² Wasserstoff oder Alkyl ist und/oder
(b) ein Silan oder eine Mischung unterschiedlicher Silane mit der Formel R'aSiX4-a, worin R' gleich oder verschieden sein kann und ein unsubstituiertes oder substituiertes Alkyl, Alkenyl, Aryl, Arylalkyl oder Alkylaryl ist, X eine unter Hydrolysebedingungen vom Silicium unter Ausbilden eine Si-O-Si-Gruppe hydrolytisch kondensierbare Gruppe oder OH ist und a 1 oder 2 bedeutet, oder ein durch hydrolytische Kondensation dieses Silans/dieser Silane erhältliches Oligosiloxan oder eine Mischung solcher Oligosiloxane und
(2) eine aromatische Komponente mit mindestens einer phenolischen Hydroxygruppe in einem Lösungsmittel vorgelegt und in einem einzigen Schritt
(3) mit einem wässrigen alkalischen Medium oder einer nichtwässrigen Base sowie Wasser und
(4) mit einer Aldehyd-Komponente
umgesetzt werden, worauf das Lösemittel entfernt und das entstandene Harz durch Einwirkung von Temperatur ausgehärtet wird.

12. Verfahren zum Herstellen eines phenoplastischen Formkörpers, der sich auf Oberflächen eines Trägermaterials befindet, wobei der phenoplastische Formkörper durch Aushärten eines Resolharzes aus mindestens einer aromatischen Komponente mit mindestens einer phenolischen Hydroxygruppe und mindestens einer Aldehyd-Komponente entstanden ist, welches in die Resolharz-Matrix eingebettete Bereiche aus organisch modifiziertem Polysiloxan besitzt, wobei das Polysiloxan kohlenstoffhaltige Gruppen aufweist, die zumindest teilweise in Form von unsubstituierten oder substituierten Alkyl-, Alkenyl-, Aryl-, Arylalkyl- oder Alkylarylgruppen an Siliciumatome gebunden sind und nicht über kovalente Bindungen an reaktive Gruppen des Resolharzes gebunden sind, **dadurch gekennzeichnet, dass**
(1)
(a) ein Silazan oder eine Mischung unterschiedlicher Silazane mit einer oder mehreren Einheiten -[Si(R)(R¹)-NR²]-, worin R und R¹ in jeder einzelnen Einheit und, bei Vorliegen unterschiedlicher Einheiten, in unterschiedlichen Einheiten jeweils gleich oder verschieden sind und ein unsubstituiertes oder substituiertes Alkyl, Alkenyl, Aryl, Arylalkyl, Alkylaryl oder Wasserstoff bedeuten und R² Wasserstoff oder Alkyl ist und/oder
(b) ein Silan oder eine Mischung unterschiedlicher Silane mit der Formel R'aSiX4-a, worin R' gleich oder verschieden sein kann und ein unsubstituiertes oder substituiertes Alkyl, Alkenyl, Aryl, Arylalkyl oder Alkylaryl ist, X eine unter Hydrolysebedingungen vom Silicium unter Ausbilden eine Si-O-Si-Gruppe hydrolytisch kondensierbare Gruppe oder OH ist und a 1 oder 2 bedeutet, oder ein durch hydrolytische Kondensation dieses Silans/dieser Silane erhältliches Oligosiloxan oder eine Mischung solcher Oligosiloxane und
(2) eine aromatische Komponente mit mindestens einer phenolischen Hydroxygruppe in einem Lösungsmittel vorgelegt und in einem einzigen Schritt
(3) mit einem wässrigen alkalischen Medium oder einer nichtwässrigen Base sowie Wasser und
(4) mit einer Aldehyd-Komponente
umgesetzt werden, die entstandene Lösung, gegebenenfalls durch Zugabe oder Entfernen von Lösungsmittel, auf eine geeignete Viskosität eingestellt, auf ein Trägermaterial aufgebracht und schließlich durch Einwirkung von Temperatur und gegebenenfalls Druck ausgehärtet wird.

13. Verfahren nach einem der Ansprüche 7 bis 12, **dadurch gekennzeichnet, dass** das molare Verhältnis der aromatischen Komponente mit mindestens einer phenolischen Hydroxygruppe zu der Aldehyd-Komponente zwischen 1 : 1,05 und 1 : 3,5 liegt.

14. Verfahren nach Anspruch 12, worin das Trägermaterial ein textiles Flächenmaterial ist, das mit der entstandenen Lösung getränkt wird.

15. Verfahren nach Anspruch 14, **dadurch gekennzeichnet, dass** das textile Flächenmaterial Glasfasern, Carbonfasern und/oder Naturfasern enthält oder hieraus besteht.

## Claims

1. A resol resin composed of at least one aromatic component with at least one phenolic hydroxyl group and at least one aldehyde component, **characterized by** areas that are embedded in the resol resin matrix and are composed of organically-modified polysiloxane, wherein said polysiloxane contains carbon-containing groups that are at least partially bonded to silicon atoms in the form of unsubstituted or substituted alkyl, alkenyl, aryl, arylalkyl or alkyl-aryl groups and that are bonded to reactive groups of said resol resinnot through covalent bonds, wherein more than one carbon-containing residue is bonded to at least 40 percent of the silicon atoms of said polysiloxane.

2. Resol resin according to Claim 1, **characterized in that** said polysiloxanes, on average, have an amount of 3 or less, more preferably 2 or less, and particularly preferably 1.6 or less carbon atoms per silicon atom.

3. Resol resin according to one of the preceding Claims, in which said alkyl, alkenyl, aryl, arylalkyl, and/or alkyl-aryl groups of said polysiloxane are unsubstituted or partially or completely fluorinated.

4. Resol resin according to one of the preceding Claims, further comprising a wax, preferably a wax composed of a polysiloxane copolymer.

5. A moulded body consisting of or including a phenoplast material, prepared by curing the resol resin according to one of the preceding Claims.

6. A moulded body according to Claim 5 comprising a support material as well as a cured resol resin located on its surfaces.

7. A method for producing a resol resin from at least one aromatic component with at least one phenolic hydroxyl group and at least one aldehyde component, comprising areas that are embedded in the resol resin matrix and are composed of organically-modified polysiloxane, wherein said polysiloxane contains hydrocarbon groups that are at least partially bonded to silicon atoms in the form of unsubstituted or substituted alkyl, alkenyl, aryl, arylalkyl or alkyl-aryl groups and that are bonded to reactive groups of said resol resin not through covalent links, **characterized in that**
(1)
(a) a silazane or a mixture of different silazanes with one or more units -[Si(R)(R¹)-NR²]-, in which R and R¹ each are equal or different in each individual unit, and if different units exist, are the same or different in different units, and are represented by an unsubstituted or substituted alkyl, alkenyl, aryl, arylalkyl, alkyl-aryl or hydrogen, and in which R² is hydrogen or alkyl, and/or
(b) a silane or a mixture of different silanes having the formula R'ₐSiX₄₋ₐ, in which R' is equal or different and is an unsubstituted or substituted alkyl, alkenyl, aryl, arylalkyl or alkyl-aryl, X is a hydrolytically condensable group that forms a Si-O-Si group under hydrolysis conditions of silicon, or is an OH group, and a means 1 or 2, or an oligosiloxane obtainable through hydrolytic condensation of said silane/silanes, or a mixture of such oligosiloxanes, and
(2) an aromatic component with at least one phenolic hydroxyl group are provided in a solvent and is reacted in said solvent
(3) with an aqueous alkaline medium or a non-aqueous base and water as a catalyst and
(4) with an aldehyde component.

8. The method according to Claim 7, **characterized in that** the solvent is a non-aqueous solvent and preferably an alcohol, and/or wherein the aqueous alkaline medium is selected from aqueous sodium and potassium hydroxide with a pH value of at least 13.

9. The method according to one of the Claims 7 and 8, **characterized in that** the addition of said aqueous alkaline medium or the non-aqueous base and water is made directly prior to or simultaneously with the addition of said aldehyde component.

10. The method according to one of the Claims 7 to 9, **characterized in that** after completion of the reaction, a wax is added to said polysiloxane-modified resol resin, preferably in a quantity of 1 to 25% by mass with regard to the mass of the entire system.

11. A method for producing a phenoplastic moulded body, obtained by curing a resol resin composed of at least one aromatic component with at least one phenolic hydroxyl group and at least one aldehyde component, comprising areas that are embedded in the resol resin matrix and are composed of organically-modified polysiloxane, wherein said polysiloxane contains hydrocarbon groups that are at least partially bonded to silicon atoms in the form of unsubstituted or substituted alkyl, alkenyl, aryl, arylalkyl or alkyl-aryl groups and that are bonded to reactive groups of said resol resinnot through covalent bonds, **characterized in that**
(1)
(a) a silazane or a mixture of different silazanes with one or more units -[Si(R)(R¹)-NR²]-, in which R and R¹ each are equal or different in each individual unit, and if different units exist, are the same or different in different units, and are represented by an unsubstituted or substituted alkyl, alkenyl, aryl, arylalkyl, alkyl-aryl or hydrogen, and in which R² is hydrogen or alkyl, and/or
(b) a silane or a mixture of different silanes having the formula R'ₐSiX₄₋ₐ, in which R' is equal or different and is an unsubstituted or substituted alkyl, alkenyl, aryl, arylalkyl or alkyl-aryl, X is a hydrolytically condensable group that forms a Si-O-Si group under hydrolysis conditions of silicon, or is an OH group, and a means 1 or 2, or an oligosiloxane obtainable through hydrolytic condensation of said silane/silanes, or a mixture of such oligosiloxanes, and
(2) an aromatic component with at least one phenolic hydroxyl group are provided in a solvent and is reacted in said solvent
(3) with an aqueous alkaline medium or a non-aqueous base and water as a catalyst and
(4) with an aldehyde component,
and subsequently the solvent is removed and the obtained resin is cured through the effect of temperature.

12. A method for producing a phenoplastic moulded body present on the surface of a support material, wherein the phenolic resin moulded article is obtained by curing a resol resin composed of at least one aromatic component with at least one phenolic hydroxyl group and at least one aldehyde component, comprising areas that are embedded in the resol resin matrix and are composed of organically-modified polysiloxane, wherein said polysiloxane contains hydrocarbon groups that are at least partially bonded to silicon atoms in the form of unsubstituted or substituted alkyl, alkenyl, aryl, arylalkyl or alkyl-aryl groups and that are bonded to reactive groups of said resol resinnot through covalent bonds, **characterized in that**
(1)
(a) a silazane or a mixture of different silazanes with one or more units -[Si(R)(R¹)-NR²]-, in which R and R¹ each are equal or different in each individual unit, and if different units exist, are the same or different in different units, and are represented by an unsubstituted or substituted alkyl, alkenyl, aryl, arylalkyl, alkyl-aryl or hydrogen, and in which R² is hydrogen or alkyl, and/or
(b) a silane or a mixture of different silanes having the formula R'ₐSiX₄₋ₐ, in which R' is equal or different and is an unsubstituted or substituted alkyl, alkenyl, aryl, arylalkyl or alkyl-aryl, X is a hydrolytically condensable group that forms a Si-O-Si group under hydrolysis conditions of silicon, or is an OH group, and a means 1 or 2, or an oligosiloxane obtainable through hydrolytic condensation of said silane/silanes, or a mixture of such oligosiloxanes, and
(2) an aromatic component with at least one phenolic hydroxyl group are provided in a solvent and is reacted in said solvent
(3) with an aqueous alkaline medium or a non-aqueous base and water as a catalyst and
(4) with an aldehyde component;
the resulting solution is adjusted to a suitable viscosity, optionally by adding or removing solvent, applied to a support material, and finally cured through the effect of temperature and, optionally, pressure.

13. The method according to one of the Claims 7 to 12, **characterized in that** the molar ratio of said aromatic component with at least one phenol hydroxyl group to said aldehyde component is between 1 : 1.05 and 1 : 3.5.

14. The method according to Claim 12, **characterized in that** the substrate is a textile sheet material, which is impregnated with the resulting solution.

15. A method according to Claim 14, wherein said textile sheet material contains or consists of glass fibers, carbon fibers, and/or natural fibers.

## Revendications

1. Résine résol constituée d'au moins un composant aromatique présentant au moins un groupe hydroxy phénolique et d'au moins un composant aldéhyde, **caractérisée par** des régions en polysiloxane organiquement modifié incorporées dans la matrice de résine résol, dans laquelle le polysiloxane présente des groupes contenant du carbone qui sont reliés à des atomes de silicium au moins partiellement sous forme de groupes alkyle, alcényle, aryle, arylalkyle ou alkylaryle non substitués ou substitués et qui ne sont pas reliés à des groupes réactifs de la résine résol par des liaisons covalentes, dans laquelle plus d'un radical contenant du carbone est relié à au moins 40 pour cent des atomes de silicium du polysiloxane.

2. Résine résol selon la revendication 1, **caractérisée en ce que** les polysiloxanes présentent une proportion en moyenne de maximum 3, de préférence maximum 2 et de préférence encore maximum 1,6 atomes de carbone par atome de silicium.

3. Résine résol selon l'une quelconque des revendications précédentes, dans laquelle les groupes alkyle, alcényle, aryle, arylalkyle et/ou alkylaryle du polysiloxane sont non substitués ou sont partiellement ou complètement fluorés.

4. Résine résol selon l'une quelconque des revendications précédentes, comprenant en outre une cire, de préférence une cire en un copolymère de polysiloxane.

5. Corps moulé en ou avec un matériau phénoplaste, obtenu par durcissement de la résine résol selon l'une quelconque des revendications précédentes.

6. Corps moulé selon la revendication 5, comprenant un matériau de support ainsi qu'une résine résol durcie se trouvant sur des surfaces de celui-ci.

7. Procédé de fabrication d'une résine résol constituée d'au moins un composant aromatique présentant au moins un groupe hydroxy phénolique et d'au moins un composant aldéhyde, qui possède des régions en polysiloxane organiquement modifié incorporées dans la matrice de résine résol, dans lequel le polysiloxane présente des groupes contenant du carbone, qui sont reliés à des atomes de silicium au moins partiellement sous forme de groupes alkyle, alcényle, aryle, arylalkyle ou alkylaryle non substitués ou substitués et qui ne sont pas reliés à des groupes réactifs de la résine résol par des liaisons covalentes, **caractérisé en ce que**
(1)
(a) un silazane ou un mélange de différents silazanes avec une ou plusieurs unités - [Si(R)(R¹)-NR²]-, dans lesquelles R et R¹ sont respectivement identiques ou différents dans chaque unité individuelle et, en cas de présence d'unités différentes, dans des unités différentes, et représentent un groupe alkyle, alcényle, aryle, arylalkyle, alkylaryle non substitué ou substitué ou un hydrogène et R² est un hydrogène ou un alkyle, et/ou
(b) un silane ou un mélange de différents silanes de formule R'ₐSiX₄₋ₐ, dans laquelle R' est identique ou différent et représente un groupe alkyle, alcényle, aryle, arylalkyle ou alkylaryle non substitué ou substitué, X représente un groupe hydrolytiquement condensable dans des conditions d'hydrolyse du silicium avec formation d'un groupe Si-O-Si ou est un OH et a vaut 1 ou 2, ou un oligosiloxane pouvant être obtenu par condensation hydrolytique de ce silane/de ces silanes ou un mélange de ces oligosiloxanes et
(2) un composant aromatique présentant au moins un groupe hydroxy phénolique sont présentés dans un solvant et sont combinés dans ce solvant
(3) avec un milieu aqueux alcalin ou une base non aqueuse ainsi que de l'eau comme catalyseur et
(4) avec un composant aldéhyde.

8. Procédé selon la revendication 7, **caractérisé en ce que** le solvant est un solvant non aqueux et de préférence un alcool, et/ou dans lequel le milieu aqueux alcalin est choisi parmi l'hydroxyde de sodium aqueux et l'hydroxyde de potassium aqueux avec une valeur de pH d'au moins 13.

9. Procédé selon une des revendications 7 ou 8, **caractérisé en ce que** l'ajout du milieu aqueux alcalin ou de la base non aqueuse et d'eau est effectué avant ou en même temps que l'ajout du composant aldéhyde.

10. Procédé selon une des revendications 7 à 9, **caractérisé en ce qu'**après la combinaison on ajoute une cire à la résine résol modifiée au polysiloxane, notamment de préférence en une quantité de 1 à 25 % en masse, rapportés à la masse du système total.

11. Procédé de fabrication d'un corps moulé phénoplastique, obtenu par le durcissement d'une résine résol constituée d'au moins un composant aromatique présentant au moins un groupe hydroxy phénolique et d'au moins un composant aldéhyde, qui possède des régions en polysiloxane organiquement modifié incorporées dans la matrice de résine résol, dans lequel le polysiloxane présente des groupes contenant du carbone, qui sont reliés à des atomes de silicium au moins partiellement sous forme de groupes alkyle, alcényle, aryle, arylalkyle ou alkylaryle non substitués ou substitués et qui ne sont pas reliés à des groupes réactifs de la résine résol par des liaisons covalentes, **caractérisé en ce que**
(1)
(a) un silazane ou un mélange de différents silazanes avec une ou plusieurs unités -[Si(R)(R¹)-NR²]-, dans lesquelles R et R¹ sont respectivement identiques ou différents dans chaque unité individuelle et, en cas de présence d'unités différentes, dans des unités différentes, et représentent un groupe alkyle, alcényle, aryle, arylalkyle, alkylaryle non substitué ou substitué ou un hydrogène et R² est un hydrogène ou un alkyle, et/ou
(b) un silane ou un mélange de différents silanes de formule R'ₐSiX₄₋ₐ, dans laquelle R' peut être identique ou différent et représente un groupe alkyle, alcényle, aryle, arylalkyle ou alkylaryle non substitué ou substitué, X représente un groupe hydrolytiquement condensable dans des conditions d'hydrolyse du silicium avec formation d'un groupe Si-O-Si ou est un OH et a vaut 1 ou 2, ou un oligosiloxane pouvant être obtenu par condensation hydrolytique de ce silane/de ces silanes ou un mélange de ces oligosiloxanes et
(2) un composant aromatique présentant au moins un groupe hydroxy phénolique sont présentés dans un solvant et sont combinés en une seule étape
(3) avec un milieu aqueux alcalin ou une base non aqueuse ainsi que de l'eau et
(4) avec un composant aldéhyde, puis le solvant est éliminé et la résine obtenue est durcie par l'action de la température.

12. Procédé de fabrication d'un corps moulé phénoplastique, qui se trouve sur des surfaces d'un matériau de support, dans lequel le corps moulé phénoplastique est obtenu par durcissement d'une résine résol constituée d'au moins un composant aromatique présentant au moins un groupe hydroxy phénolique et d'au moins un composant aldéhyde, qui possède des régions en polysiloxane organiquement modifié incorporées dans la matrice de résine résol, dans lequel le polysiloxane présente des groupes contenant du carbone, qui sont reliés à des atomes de silicium au moins partiellement sous forme de groupes alkyle, alcényle, aryle, arylalkyle ou alkylaryle non substitués ou substitués et qui ne sont pas reliés à des groupes réactifs de la résine résol par des liaisons covalentes, **caractérisé en ce que**
(1)
(a) un silazane ou un mélange de différents silazanes avec une ou plusieurs unités - [Si(R)(R¹)-NR²]-, dans lesquelles R et R¹ sont respectivement identiques ou différents dans chaque unité individuelle et, en cas de présence d'unités différentes, dans des unités différentes, et représentent un groupe alkyle, alcényle, aryle, arylalkyle, alkylaryle non substitué ou substitué ou un hydrogène et R² est un hydrogène ou un alkyle, et/ou
(b) un silane ou un mélange de différents silanes de formule R'ₐSiX₄₋ₐ, dans laquelle R' peut être identique ou différent et représente un groupe alkyle, alcényle, aryle, arylalkyle ou alkylaryle non substitué ou substitué, X représente un groupe hydrolytiquement condensable dans des conditions d'hydrolyse du silicium avec formation d'un groupe Si-O-Si ou est un OH et a vaut 1 ou 2, ou un oligosiloxane pouvant être obtenu par condensation hydrolytique de ce silane/de ces silanes ou un mélange de ces oligosiloxanes et
(2) un composant aromatique présentant au moins un groupe hydroxy phénolique sont présentés dans un solvant et sont combinés en une seule étape
(3) avec un milieu aqueux alcalin ou une base non aqueuse ainsi que de l'eau et
(4) avec un composant aldéhyde, la solution obtenue est réglée à une viscosité appropriée, éventuellement par ajout ou élimination de solvant, elle est déposée sur un matériau de support et elle est finalement durcie par l'action de la température et éventuellement de la pression.

13. Procédé selon l'une quelconque des revendications 7 à 12, **caractérisé en ce que** le rapport molaire entre le composant aromatique présentant au moins un groupe hydroxy phénolique et le composant aldéhyde se situe entre 1:1,05 et 1:3,5.

14. Procédé selon la revendication 12, dans lequel le matériau de support est un matériau textile plat, qui est imprégné avec la solution obtenue.

15. Procédé selon la revendication 14, **caractérisé en ce que** le matériau textile plat contient des fibres de verre, des fibres de carbone et/ou des fibres naturelles ou en est composé.
